# EUROPEAN PATENT SPECIFICATION

(11) **EP 4 184 678 B1**
(45) Date of publication and mention of the grant of the patent: **01.10.2025**
(21) Application number: 21892090.8
(22) Date of filing: 25.08.2021
(51) Int. Cl.: H01M 50/209, H01M 50/572, H01M 10/42, H01M 50/247, H01M 50/50, H01M 50/55, H01M 50/557, H01M 50/178, H01M 50/553, H01M 50/20

(54) **BATTERY PACK AND ELECTRONIC DEVICE COMPRISING SAME**
BATTERIEPACK UND ELEKTRONISCHE VORRICHTUNG DAMIT
BLOC-BATTERIE ET DISPOSITIF ÉLECTRONIQUE LE COMPRENANT

(30) Priority: 10.11.2020 KR 20200149671
(43) Date of publication of application: 24.05.2023
(73) Proprietor: LG Energy Solution, Ltd., Seoul 07335 (KR)
(72) Inventor: OH, Sung-Jin, Daejeon 34122 (KR)
(74) Representative: Plasseraud IP
(86) International application number: PCT/KR2021/011401
(87) International publication number: WO 2022/102920

(56) References cited:
- JP-A- 2006 136 575
- JP-A- 2019 160 406
- JP-A- 2019 160 406
- KR-A- 20100 067 331
- KR-A- 20130 025 165
- KR-A- 20170 025 384
- KR-A- 20190 036 979
- US-A1- 2003 072 994

## Description

### TECHNICAL FIELD

The present disclosure relates to a battery pack and an electronic device including the same, and more specifically, to a battery pack having a structure that may secure design competitiveness by reducing subsidiary materials required for manufacturing the battery pack and also improve energy density and product quality by expanding the space occupied by battery cells and a PCM (Protection Circuit Module), and an electronic device including the same.

### BACKGROUND ART

A small battery pack applied to a small electronic device such as a mobile phone includes a PCM that is generally connected to a pouch-type battery cell and protects the battery cell from overcharging. In a battery pack to which such a pouch-type battery cell is applied, it is necessary to prevent anode connection between the PCM and the battery cell. In order to prevent anode connection, a Poron tape and/or PET tape and/or injection-molded case (a case injected to have a structure capable of isolating between the PCM and the battery cell), or the like may be applied. By applying such a part, it is possible to prevent an inner metal layer from being oxidized due to the contact between the inner metal layer and the PCM in the vicinity of a lead drawing area where the inner metal layer of the pouch case may be exposed to the outside, thereby preventing the insulation of the pouch case from being deteriorated.

However, when a tape and/or an injection-molded case is applied as described above, a decrease in process efficiency and an increase in manufacturing cost due to the addition of parts are inevitable, and a decrease in energy density due to an increase in the volume of the battery pack is also inevitable. In addition, since a space for installing the PCM cannot be sufficiently secured, the size of the PCM must be reduced in order to achieve a target energy density. Accordingly, a sufficient distance cannot be secured between circuit patterns of the PCM, and thus reliability of the product quality may be deteriorated.

Examples of background art can be found in US2003/072994A1, JP2019160406A, and JP2006136575A.

### DISCLOSURE

### Technical Problem

The present disclosure is designed to solve the problems of the related art, and therefore the present disclosure is directed to providing a battery pack, which may have improved process efficiency, improved productivity and improved energy density by reducing the number of parts applied to prevent anode connection between a PCM and a battery cell.

However, the technical problem to be solved by the present disclosure is not limited to the above, and other objects not mentioned herein will be understood from the following description by those skilled in the art.

### Technical Solution

In accordance with the independent claim 1 there is provided a battery pack, comprising: a battery cell having a pair of electrode leads; and a PCM including a PCB having a pair of connection terminals respectively coupled to the pair of electrode leads and a thermally contracting tube configured to surround the PCB, the PCM being configured to prevent overcharging of the battery cell. The thermally contracting tube includes a pair of open portions exposing the pair of connection terminals.

The battery cell may include an electrode assembly; a pair of electrode leads connected to the electrode assembly; and a cell case configured to accommodate the electrode assembly so that the electrode lead is drawn to the outside.

The pair of electrode leads may be drawn in the same direction.

The cell case may include an accommodation portion configured to give an accommodation space for accommodating the electrode assembly; and a sealing portion configured to extend outward from a circumference of the accommodation portion.

The sealing portion may include a terrace portion serving as a region where the pair of electrode leads are drawn; and a pair of wing portions formed at both sides of the battery cell in a width direction.

The PCM may be located on the terrace portion.

The pair of electrode leads may be bent toward the accommodation portion at an outer side of the cell case.

The pair of connection terminals may be exposed to the outside of the thermally contracting tube and respectively coupled to the pair of electrode leads.

The pair of connection terminals may be coupled to one of both surfaces of the electrode lead, which is opposite to a surface facing the terrace portion.

Meanwhile, in another aspect of the present disclosure, there is provided an electronic device, comprising the battery pack according to an embodiment of the present disclosure.

### Advantageous Effects

According to an embodiment of the present disclosure, it is possible to provide a battery pack, which may have improved process efficiency, improved productivity and improved energy density by reducing the number of parts applied to prevent anode connection between a PCM and a battery cell.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIGS. 2 and 3 are diagrams showing an electrode assembly according to the present disclosure.
FIGS. 4 and 5 are diagrams showing a PCM according to the present disclosure.
FIGS. 6 and 7 are diagrams showing a coupling structure between the electrode assembly and the PCM according to the present disclosure.
FIG. 8 is a side view showing a part of the battery pack depicted in FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, while the scope of patent protection is defined by the appended claims.

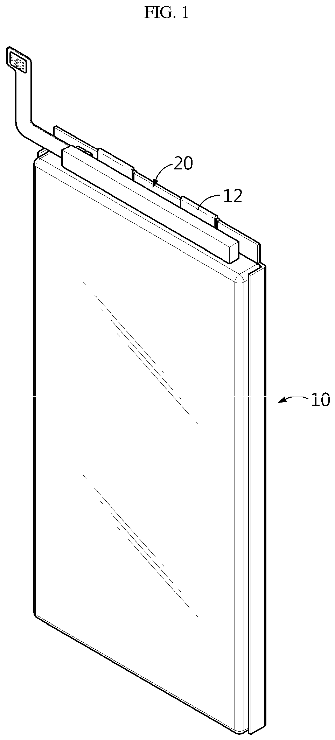

Referring to FIG. 1, a battery pack according to an embodiment of the present disclosure includes a battery cell 10 and a protection circuit module (PCM) 20. Although not shown in the drawings, the battery pack according to an embodiment of the present disclosure may further include a pack housing for accommodating the combination of the battery cell 10 and the PCM 20.

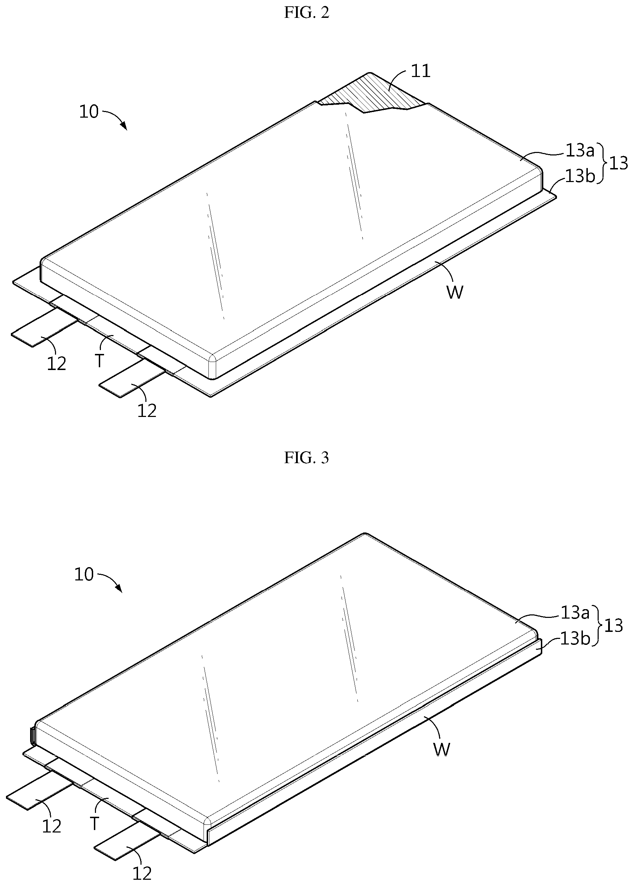

Referring to FIGS. 2 and 3, the battery cell 10 includes an electrode assembly 11, a pair of electrode leads 12, and a cell case 13. As the battery cell 10, a pouch-type battery cell may be applied.

The pair of electrode leads 12 are coupled to electrode tabs (not shown) formed at the electrode assembly 11 to be electrically connected to the electrode assembly 11. The pair of electrode leads 12 extend in the same direction and are exposed to the outside of the cell case 13 while being spaced apart from each other along a width direction of the battery cell 10.

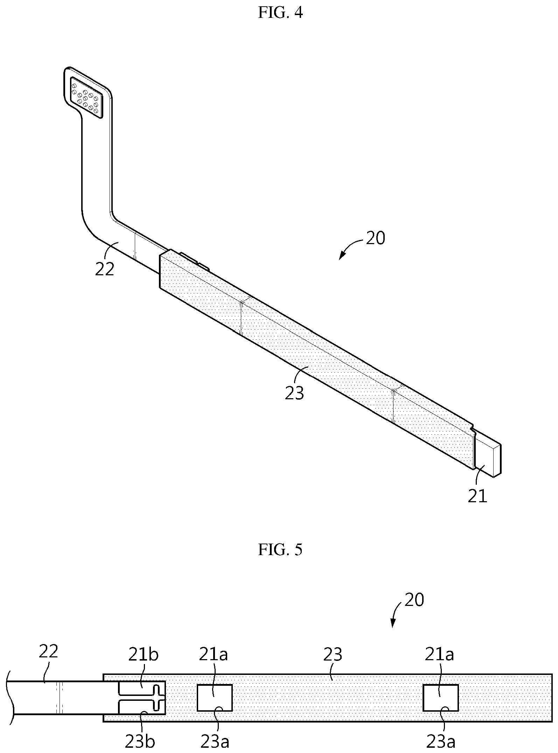

The cell case 13 accommodates the electrode assembly 11 so that the electrode lead 12 is drawn to the outside. The cell case 13 includes an accommodation portion 13a for giving an accommodation space for accommodating the electrode assembly 11 and a sealing portion 13b having a shape extending outward from the circumference of the accommodation portion 13a. The cell case 13 may include an upper case and a lower case made of a pouch film, respectively. The pouch film may include a metal layer and a resin layer for covering the metal layer. The metal layer may include, for example, aluminum. The metal layer may be exposed to the outside through a surface (a cut surface) constituting the thickness of the pouch film. The structure of a thermally contracting tube 23 (FIGS. 4 and 5) of the present disclosure for preventing anode connection that may occur in the region where the metal layer is exposed will be described in detail later.

The accommodation portion 13a is formed in the upper case and/or the lower case. At the circumference of the accommodation portion 13a, the upper case and the lower case are fused in contact with each other and thermally sealed to form the sealing portion 13b.

The sealing portion 13b includes a terrace portion T and a wing portion W. The pair of electrode leads 12 are drawn out of the pouch case 13 through the sealing portion 13b. A region of the sealing portion 13b located at a side where the electrode lead 12 is drawn out is defined as the terrace portion T. A region of the sealing portion 13b respectively formed at both sides of the battery cell 10 in the width direction is defined as the wing portion W. The wing portion W is folded to face the side surface of the accommodation portion 13a.

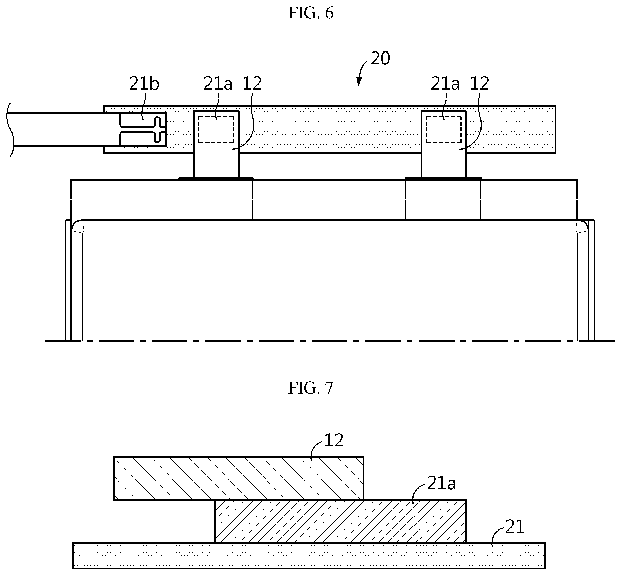

Referring to FIGS. 4 to 8, the PCM 20 includes a printed circuit board (PCB) 21 and a thermally contracting tube 23. The PCM 20 may further include a connector 22 in addition to the PCB 21 and the thermally contracting tube 23. The PCM 20 is electrically connected to the battery cell 10 to prevent overcharging of the battery cell 10.

The PCB 21 includes at least one electronic device (not shown) mounted to one surface thereof. The PCB 21 includes a pair of connection terminals 21a formed at a surface opposite to a surface where an electronic device is mounted and coupled to the pair of electrode leads 12, respectively. The connection terminal 21a is connected to an electronic device by a printed circuit pattern formed on the PCB 21.

The PCB 21 may include a connector holder 21b formed on one surface where the pair of connection terminals 21a are formed.

The thermally contracting tube 23 entirely surrounds the PCB 21 to prevent the anode connection between the PCB 21 and the battery cell 10. The thermally contracting tube 23 has a property (heat shrinkage) of contracting when heat is applied above a certain temperature and an insulation property. As the thermally contracting tube 23, for example, polyolefin, fluorine-based polymer, thermoplastic elastomer, vinyl chloride, silicone rubber, or the like may be used.

The thermally contracting tube 23 includes a pair of open portions 23a. Each of the pair of connection terminals 21a is exposed to the outside of the thermally contracting tube 23 through the pair of open portions 23a. The thermally contracting tube 23 may include a holder exposing portion 23b formed at one side in the longitudinal direction. In this case, the connector holder 21b is exposed to the outside of the thermally contracting tube 23 through the holder exposing portion 23b, and the connector 22 is coupled to the connector holder 21b from one longitudinal side of the PCB 21. The connector 22 is coupled with the printed circuit pattern formed on the PCB 21.

As described above, the thermally contracting tube 23 covers the entire area of the PCB 21 except for the area where the pair of connection terminals 21a and the connector holder 21b are formed. Accordingly, the anode connection between the battery cell 10 and the PCB 21 may be prevented. In order to prevent such anode connection, the connector 22 drawn to the outside of the thermally contracting tube 23 may be provided in the form of a flexible printed circuit board (FPCB) whose surface is insulated.

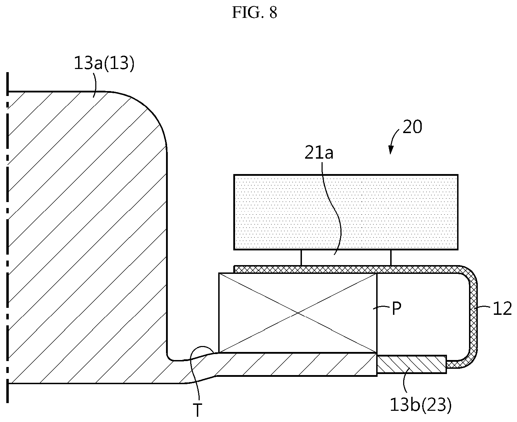

Referring to FIG. 8, the PCM 20 may be located on the terrace portion T. In this case, the pair of electrode leads 12 has a shape bent from the outer side of the cell case 13 toward the accommodation portion 13a, and the bent electrode lead 12 faces the terrace portion T. The pair of connection terminals 21a are coupled to one of both surfaces of the electrode lead 12, which is opposite to a surface facing the terrace portion T. If the PCM 20 is located on the terrace portion T as above, the energy density may be increased by utilizing a dead space.

The present disclosure has been described in detail. However, it should be understood that the detailed description and specific examples, while indicating preferred embodiments of the disclosure, the scope of patent protection is defined solely by the appended claims.

## Claims

1. A battery pack, comprising:
a battery cell (10) having a pair of electrode leads (12); and
a protection circuit module, PCM (20), including a printed circuit board, PCB (21), having a pair of connection terminals (21a) respectively coupled to the pair of electrode leads (12) and a thermally contracting tube (23) configured to surround the PCB (21), the PCM (20) being configured to prevent overcharging of the battery cell,
**characterized in that** the thermally contracting tube (23) includes a pair of open portions (23a) exposing the pair of connection terminals (21a).

2. The battery pack according to claim 1,
wherein the battery cell (10) includes:
an electrode assembly (11);
the pair of electrode leads (12) connected to the electrode assembly (11); and
a cell case (13) configured to accommodate the electrode assembly (11) so that the electrode lead (12) is drawn to the outside.

3. The battery pack according to claim 2,
wherein the pair of electrode leads (12) are drawn in the same direction.

4. The battery pack according to claim 3,
wherein the cell case (13) includes:
an accommodation portion (13a) configured to give an accommodation space for accommodating the electrode assembly (11); and
a sealing portion (13b) configured to extend outward from a circumference of the accommodation portion (13a).

5. The battery pack according to claim 4,
wherein the sealing portion (13b) includes:
a terrace portion (T) serving as a region where the pair of electrode leads (12) are drawn; and
a pair of wing portions (W) formed at both sides of the battery cell (10) in a width direction.

6. The battery pack according to claim 5,
wherein the PCM (20) is located on the terrace portion (T).

7. The battery pack according to claim 5,
wherein the pair of electrode leads (12) are bent toward the accommodation portion (13a) at an outer side of the cell case (13).

8. The battery pack according to claim 7,
wherein the pair of connection terminals (21a) are exposed to the outside of the thermally contracting tube (23) and respectively coupled to the pair of electrode leads (12).

9. The battery pack according to claim 8,
wherein the pair of connection terminals (21a) are coupled to one of both surfaces of the electrode lead (12), which is opposite to a surface facing the terrace portion (T).

10. An electronic device, comprising the battery pack according to any one of claims 1 to 9.

## Patentansprüche

1. Batteriepack, umfassend:
eine Batteriezelle (10), welche ein Paar von Elektrodenleitungen (12) aufweist; und
ein Schutzschaltungsmodul, PCM (20), welches eine gedruckte Leiterplatine, PCB (21), welche ein Paar von Verbindungsanschlüssen (21a) aufweist, welche jeweils mit dem Paar von Elektrodenleitungen (12) gekoppelt sind, und einen thermisch kontrahierenden Schlauch (23) umfasst, welcher dazu eingerichtet ist, die PCB (21) zu umgeben, wobei das PCM (20) dazu eingerichtet ist, ein Überladen der Batteriezelle zu verhindern,
**dadurch gekennzeichnet, dass** der thermisch kontrahierende Schlauch (23) ein Paar von offenen Abschnitten (23a) umfasst, welche das Paar von Verbindungsanschlüssen (21a) freilegen.

2. Batteriepack nach Anspruch 1,
wobei die Batteriezelle (10) umfasst:
eine Elektrodenanordnung (11);
das Paar von Elektrodenleitungen (12), welches mit der Elektrodenanordnung (11) verbunden ist; und
ein Zellengehäuse (13), welches dazu eingerichtet ist, die Elektrodenanordnung (11) derart aufzunehmen, dass die Elektrodenleitung (12) zu der Außenseite gezogen ist.

3. Batteriepack nach Anspruch 2,
wobei das Paar von Elektrodenleitungen (12) in der gleichen Richtung gezogen ist.

4. Batteriepack nach Anspruch 3,
wobei das Zellengehäuse (13) umfasst:
einen Aufnahmeabschnitt (13a), welcher dazu eingerichtet ist, einen Aufnahmeraum für ein Aufnehmen der Elektrodenanordnung (11) bereitzustellen; und
einen Abdichtungsabschnitt (13b), welcher dazu eingerichtet ist, sich von einem Umfang des Aufnahmeabschnitts (13a) nach außen zu erstrecken.

5. Batteriepack nach Anspruch 4,
wobei der Abdichtungsabschnitt (13b) umfasst:
einen Terrassenabschnitt (T), welcher als ein Bereich dient, an welchem das Paar von Elektrodenleitungen (12) gezogen ist; und
ein Paar von Flügelabschnitten (W), welche an beiden Seiten der Batteriezelle (10) in eine Breitenrichtung gebildet sind.

6. Batteriepack nach Anspruch 5,
wobei das PCM (20) an dem Terrassenabschnitt (T) angeordnet ist.

7. Batteriepack nach Anspruch 5,
wobei das Paar von Elektrodenleitungen (12) zu dem Aufnahmeabschnitt (13a) an einer äußeren Seite des Zellengehäuses (13) gebogen ist.

8. Batteriepack nach Anspruch 7,
wobei das Paar von Verbindungsanschlüssen (21a) zu einer der Außenseite des thermisch kontrahierenden Schlauchs (23) freigelegt ist und jeweils mit dem Paar von Elektrodenleitungen (12) gekoppelt ist.

9. Batteriepack nach Anspruch 8,
wobei das Paar von Verbindungsanschlüssen (21a) mit einer von beiden Flächen der Elektrodenleitung (12) gekoppelt ist, welche entgegengesetzt zu einer Fläche ist, welche dem Terrassenabschnitt (T) zugewandt ist.

10. Elektronische Vorrichtung, umfassend den Batteriepack nach einem der Ansprüche 1 bis 9.

## Revendications

1. Bloc-batterie, comprenant :
une cellule de batterie (10) ayant une paire de fils d'électrode (12) ; et
un module de circuit de protection, PCM (20), comportant une carte de circuit imprimé, PCB (21), ayant une paire de bornes de raccordement (21a) respectivement couplée à la paire de fils d'électrode (12) et un tube thermorétractable (23) configuré pour entourer la PCB (21), le PCM (20) étant configuré pour empêcher la surcharge de la cellule de batterie,
**caractérisé en ce que** le tube thermorétractable (23) comporte une paire de parties ouvertes (23a) exposant la paire de bornes de raccordement (21a).

2. Bloc-batterie selon la revendication 1,
dans lequel la cellule de batterie (10) comporte :
un ensemble d'électrode (11) ;
la paire de fils d'électrode (12) étant reliée à l'ensemble d'électrode (11) ; et
un boîtier de cellule (13) configuré pour recevoir l'ensemble d'électrode (11) de sorte que le fil d'électrode (12) soit tiré à l'extérieur.

3. Bloc-batterie selon la revendication 2,
dans lequel la paire de fils d'électrode (12) est tirée dans la même direction.

4. Bloc-batterie selon la revendication 3,
dans lequel la cellule de batterie (13) comporte :
une partie de réception (13a) configurée pour donner un espace de réception permettant de recevoir l'ensemble d'électrode (11) ; et
une partie d'étanchéité (13b) configurée pour s'étendre vers l'extérieur à partir d'une circonférence de la partie de réception (13a).

5. Bloc-batterie selon la revendication 4,
dans lequel la partie d'étanchéité (13b) comporte :
une partie étagée (T) servant de région où la paire de fils d'électrode (12) est tirée ; et
une paire de parties d'ailes (W) formée des deux côtés de la cellule de batterie (10) dans une direction de la largeur.

6. Bloc-batterie selon la revendication 5,
dans lequel le PCM (20) est situé sur la partie étagée (T).

7. Bloc-batterie selon la revendication 5,
dans lequel la paire de fils d'électrode (12) est courbée vers la partie de réception (13a) sur un côté externe du boîtier de cellule (13).

8. Bloc-batterie selon la revendication 7,
dans lequel la paire de bornes de raccordement (21a) est exposée à l'extérieur du tube thermorétractable (23) et respectivement couplée à la paire de fils d'électrode (12).

9. Bloc-batterie selon la revendication 8,
dans lequel la paire de bornes de raccordement (21a) est couplée à l'une des deux surfaces du fil d'électrode (12), qui est opposée à une surface faisant face à la partie étagée (T).

10. Dispositif électronique, comprenant le bloc-batterie selon l'une quelconque des revendications 1 à 9.
